# EUROPEAN PATENT APPLICATION

(11) **EP 3 677 973 A1**
(43) Date of publication of application: **08.07.2020**
(21) Application number: 18849739.0
(22) Date of filing: 01.08.2018
(51) Int. Cl.: G05B 19/418, G06F 3/0484

(54) **WORK SUPPORT SYSTEM**

(30) Priority: 31.08.2017 JP 2017167370
(71) Applicant: Ishida Co., Ltd., Kyoto-shi, Kyoto 606-8392 (JP)
(72) Inventor: ABE, Youichirou, Ritto-shi Shiga 520-3026 (JP)
(74) Representative: Gill Jennings & Every LLP
(86) International application number: PCT/JP2018/028922
(87) International publication number: WO 2019/044346

(57) **Abstract**

A work assistance system includes: a display unit (11) having portability and configured to display information provided to the worker; a recognition unit (22) configured to recognize a processing apparatus assumed to be viewed by the worker; and a display controller (23) configured to control a content of information to be displayed on the display unit, and when it is determined that one processing apparatus is recognized by the recognition unit, the display controller displays information on the processing apparatus recognized by the recognition unit, and when it is determined that two or more processing apparatuses are recognized by the recognition unit, the display controller displays information on the production line (30) including the processing apparatuses recognized by the recognition unit on the display unit.

## Description

### Technical Field

An aspect of the present disclosure relates to a work support system (a work assistance system).

### Background Art

A work assistance system is known which assists workers in operation, for example, in a factory using augmented reality (AR). For example, Patent Literature 1 discloses a work assistance system that displays additional information such as work explanatory information on a work target through an image display unit in the shape of eyeglasses disposed in front of the worker's eyes to cover the worker's field of vision.

### Citation List

### Patent Literature

Patent Literature 1: Japanese Unexamined Patent Publication No. 2016-208331

### Summary of Invention

### Technical Problem

Such a system can provide workers with various information. However, there is a room for improvement in various points in order to improve the work efficiency of workers.

An aspect of the present disclosure therefore is to provide a work assistance system that can improve the work efficiency of workers.

### Solution to Problem

A work assistance system according to an aspect of the present disclosure assists a worker working in a factory equipped with a production line formed with a plurality of processing apparatuses. The work assistance system includes a display unit having portability and configured to display information provided to the worker, a recognition unit configured to recognize a processing apparatus assumed to be viewed by the worker, and a display controller configured to control a content of information to be displayed on the display unit. When it is determined that one processing apparatus is recognized by the recognition unit, the display controller causes the display unit to display information on the processing apparatus recognized by the recognition unit. When it is determined that two or more processing apparatuses are recognized by the recognition unit, the display controller causes the display unit to display information on the production line including the processing apparatuses recognized by the recognition unit.

In the work assistance system with this configuration, the content of information to be displayed on the display unit is changed depending on the state of the worker (whether the worker is viewing one processing apparatus or views a plurality of processing apparatuses), based on the assumption that in a situation in which the worker wishes to obtain information on one processing apparatus, the worker would view the one processing apparatus, and in a situation in which the worker wishes to obtain information on the entire production line, the worker would view a plurality of processing apparatuses. Specifically, when one processing apparatus is recognized by the recognition unit (when the worker is viewing one processing apparatus), the display controller causes the display unit to display information on the processing apparatus recognized by the recognition unit. On the other hand, when two or more processing apparatuses are recognized by the recognition unit (when the worker is viewing two or more processing apparatuses), the display controller causes the display unit to display information on the production line including the processing apparatuses recognized by the recognition unit. In this configuration, information to be provided to the worker (information on the processing apparatus or information on the production line) can be provided at an appropriate timing based on the state of the worker. As a result, the work efficiency of the worker can be improved.

In the work assistance system according to an aspect of the present disclosure, when it is determined that there is no processing apparatus recognized by the recognition unit, the display controller may cause the display unit to display the information on the production line. In the work assistance system with this configuration, when the worker wishes to see information on the production line, the worker can easily see information on the production line with a motion such as looking up in the vertical direction.

In the work assistance system according to an aspect of the present disclosure, the display unit may display a real space in the factory and information on the processing apparatus or information on the production line so as to overlap each other. In the work assistance system with this configuration, the worker can intuitively understand what information is displayed on the display unit since information on the processing apparatus or the production line is displayed so as to overlap the real space in the factory (for example, one combination weighing apparatus).

The work assistance system according to an aspect of the present disclosure may further include an imaging unit having portability and configured to capture an image of a real space in the factory. The recognition unit may recognize a processing apparatus assumed to be viewed by the worker based on an image captured by the imaging unit. In the work assistance system with this configuration, the recognition unit can easily recognize the processing apparatus assumed to be viewed by the worker.

In the work assistance system according to an aspect of the present disclosure, each of the processing apparatuses may be provided with an identifier. The recognition unit may recognize the processing apparatus assumed to be viewed by the worker based on the identifier included in an image captured by the imaging unit. In the work assistance system with this configuration, the recognition unit can easily recognize the processing apparatus assumed to be viewed by the worker.

The work assistance system according to an aspect of the present disclosure may further include a storage unit configured to store position information and identification information of the processing apparatus associated with each other and a position information acquisition unit having portability and configured to acquire a position of the worker. The recognition unit may recognize the processing apparatus assumed to be viewed by the worker by extracting the identification information of the processing apparatus associated with the position information that matches the position of the worker from the storage unit. In the work assistance system with this configuration, the processing apparatus assumed to be viewed by the worker can be easily recognized.

The work assistance system according to an aspect of the present disclosure may further include a direction identifying unit having portability and configured to identify a direction assumed to be viewed by the worker. The storage unit may store the position information, direction information, and the identification information of the processing apparatus associated with each other. The recognition unit may recognize the processing apparatus assumed to be viewed by the worker by extracting the identification information of the processing apparatus associated with the position information and the direction information that match the position of the worker and the direction assumed to be viewed by the worker from the storage unit. In the work assistance system with this configuration, the processing apparatus assumed to be viewed by the worker can be recognized accurately.

In the work assistance system according to an aspect of the present disclosure, when a display content on the display unit is changed, the display controller may keep the state for a predetermined period of time. The work assistance system with this configuration can prevent the displayed information from continuously switching in a short time.

The work assistance system according to an aspect of the present disclosure may further include a switching unit configured to switch between causing the information on the processing apparatus to be displayed on the display unit and causing the information on the production line to be displayed on the display unit, based on an operation by the worker. In the work assistance system with this configuration, the worker can display desired information on the display unit through the worker's own operation.

### Advantageous Effects of Invention

According to an aspect of the present disclosure, the work efficiency of workers can be improved.

### Brief Description of Drawings

FIG. 1 is a diagram illustrating a configuration of a work assistance system according to an embodiment.
FIG. 2 is a perspective view illustrating the entire production lines deployed in a factory in which the work assistance system in FIG. 1 is used.
FIG. 3 is a front view illustrating a production line deployed in a factory in which the work assistance system in FIG. 1 is used.
FIG. 4 is a diagram illustrating an example of a screen displaying information managed by a management server.
FIG. 5 is a diagram of a combination weighing apparatus in FIG. 3 as viewed from the lower direction through a mount head display.
FIG. 6 is a diagram of a bag-making and packing apparatus, a seal inspection apparatus, and an X-ray inspection apparatus in FIG. 3 as viewed from the front through a mount head display.
FIG. 7(A) is a diagram illustrating a display example of information on the combination weighing apparatus and FIG. 7(B) is a diagram illustrating a display example of information on the production line.
FIG. 8 is a front view illustrating a production line and a transmitter deployed in a factory in which a work assistance system according to a modification is used.
FIG. 9 is a front view illustrating a PC tablet including a display unit according to a modification.

### Description of Embodiments

A preferred embodiment according to an aspect of the present disclosure will be described in detail below with reference to the accompanying drawings. In a description of the drawings, the same or corresponding elements are denoted by the same reference signs and an overlapping description will be omitted.

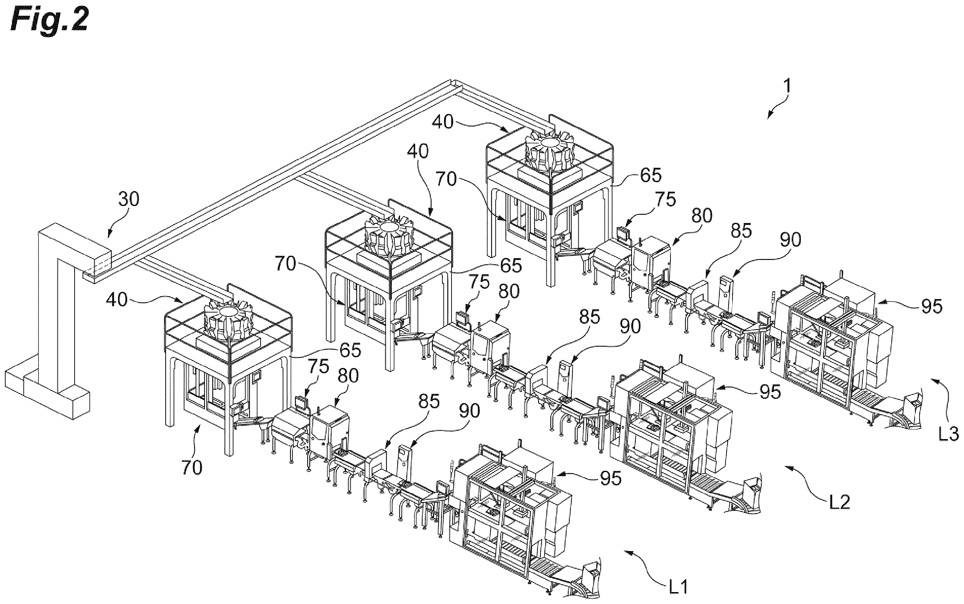

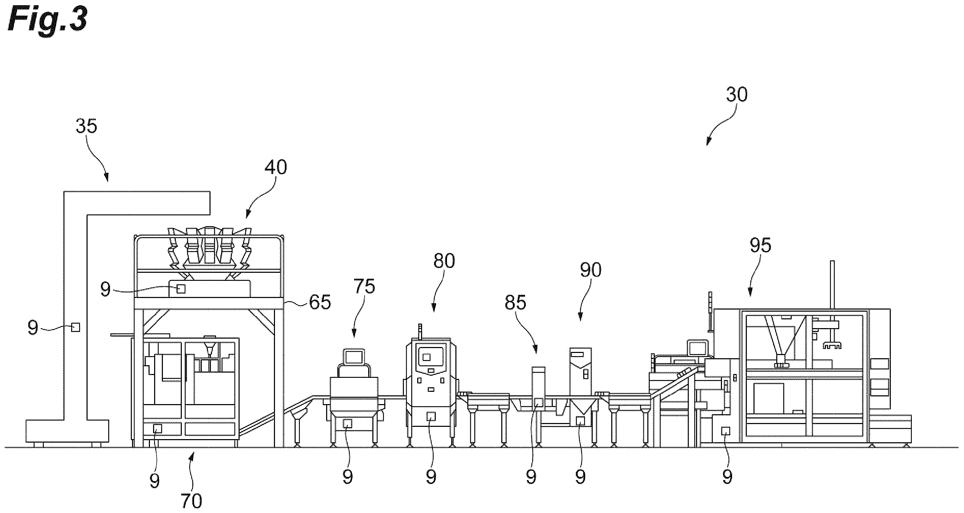

A work assistance system 1 in the present embodiment is a system that assists workers who work in a factory equipped with a plurality of processing apparatuses. In the present embodiment, the work assistance system 1 used in a factory equipped with three production lines 30 (L1 to L3) (see FIG. 3) each including a conveyance apparatus 35, a combination weighing apparatus 40, a bag-making and packing apparatus 70, a seal inspection apparatus 75, an X-ray inspection apparatus 80, a metal detector 85, a weight checking apparatus 90, and a case packing apparatus 95 as processing apparatuses as illustrated in FIG. 2 is described by way of example.

The conveyance apparatus 35 is an apparatus that conveys an article from a supply unit to the combination weighing apparatus 40 and supplies the article to an input chute of the combination weighing apparatus 40. The combination weighing apparatus 40 is an apparatus that weighs out a predetermined amount of an article. The bag-making and packing apparatus 70 is an apparatus that packs the article weighed out by the combination weighing apparatus 40 while making a bag for packing the article. The seal inspection apparatus 75 is an apparatus that detects abnormality of the bag made and packed by the bag-making and packing apparatus 70. The X-ray inspection apparatus 80 is an apparatus that inspects the state of the article contained in a bag or for inclusion of a foreign matter. The metal detector 85 is an apparatus that inspects the article contained in a bag for inclusion of metal. The weight checking apparatus 90 is an apparatus that checks the weight of a commodity containing the article. The case packing apparatus 95 is an apparatus that packs a commodity into a cardboard box.

As illustrated in FIG. 3, each of the processing apparatuses included in the production line 30 is provided with an identifier 9. For example, the identifier 9 is a two-dimensional code in which information for identifying each part is embedded.

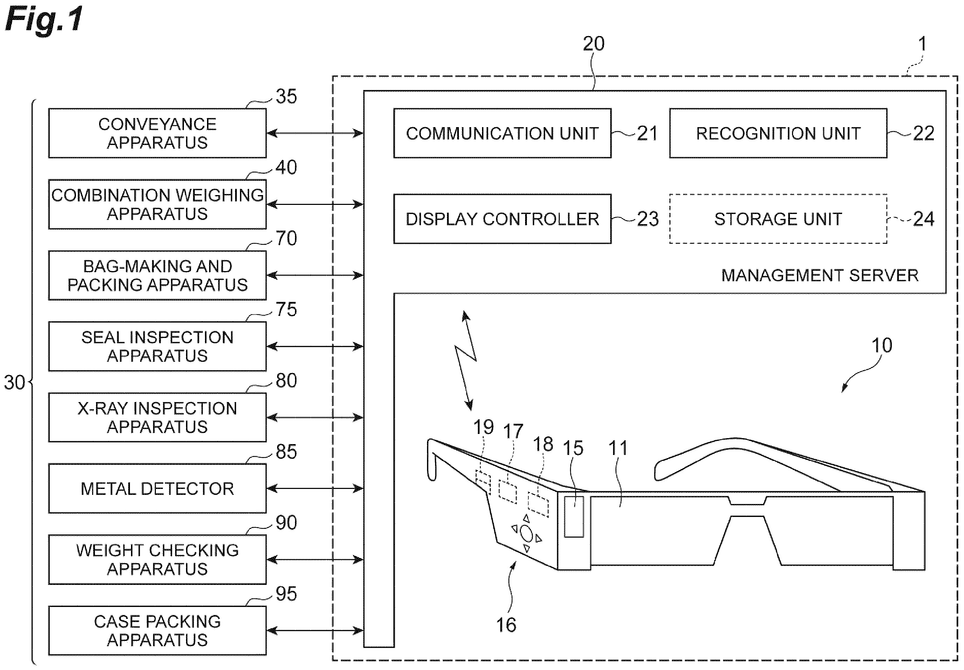

As illustrated in FIG. 1, the work assistance system 1 includes a portable head mount display (hereinafter referred to as "HMD") 10 in the shape of eyeglasses and a management server 20. The HMD 10 includes a display unit 11, an imaging unit 15, an input unit 16, and a communication unit 17.

The display unit 11 displays information provided to the worker. The display unit 11 displays (superimposes) the real space in a factory and information provided to the worker so as to overlap each other. In the present embodiment, the real space in a factory and information on a processing apparatus or information on a production line 30 are displayed so as to overlap each other. Superimposition on the display unit 11 is implemented, for example, by configuring the display unit 11 with a half mirror or by projecting an image captured by the imaging unit 15 onto the display unit 11.

The imaging unit 15 captures an image of the real space in a factory. The imaging unit 15 is provided such that the real space viewed by the worker wearing the HMD 10 generally matches the real space captured by the imaging unit 15. That is, the imaging unit 15 is a vision synchronous camera that captures a front view image in the eye direction of the worker. The imaging unit 15 displays the captured data on the display unit 11. The imaging unit 15 also transmits the captured data to the management server 20.

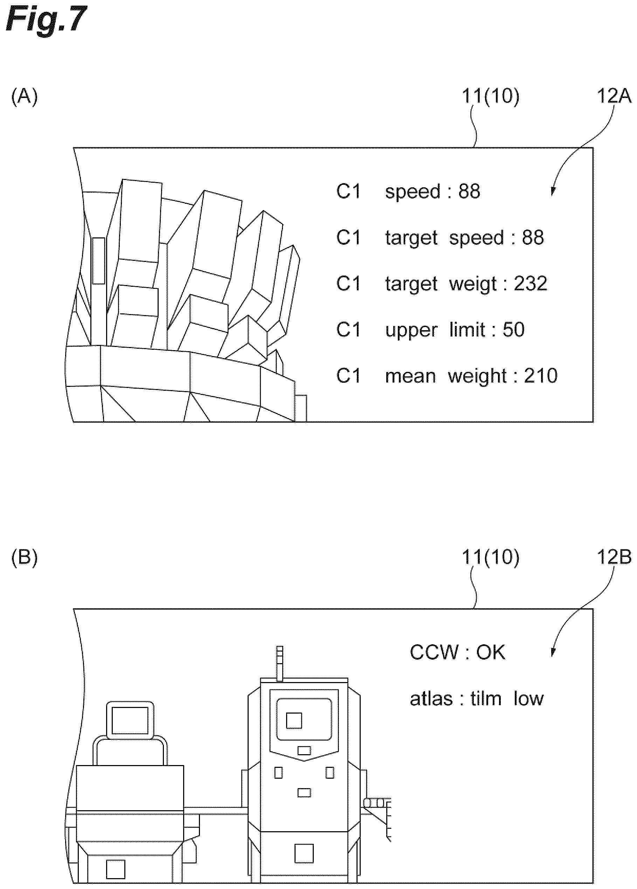

The input unit 16 includes keys to select up, down, left, and right and a key to confirm an entry. The worker can operate the input unit 16 to select a menu appearing on the display unit 11 or confirm a menu. The input unit 16 in the present embodiment functions as a switching unit that switches information appearing on the display unit 11 between information on a processing apparatus (see FIG. 7(A)) described in detail in the subsequent sections and information on a production line 30 (see FIG. 7(B)) described in detail in the subsequent sections.

The communication unit 17 is an interface for exchanging data with the management server 20. Communication with the management server 20 may be wireless or wired.

The management server 20 is configured as a computer system including a central processing unit (CPU), a main storage unit such as a random access memory (RAM) and a read only memory (ROM), an auxiliary storage unit such as a hard disk and a flash memory, an input unit such as a keyboard and a mouse, and an output unit such as a display screen. The management server 20 includes a communication unit 21, a recognition unit 22, and a display controller 23. The functions of the recognition unit 22 and the display controller 23 described in detail in the subsequent sections are executed under the control of the CPU by loading predetermined computer software into hardware such as the CPU and the main storage unit.

The management server 20 is connected to communicate with each of the conveyance apparatus 35, the combination weighing apparatus 40, the bag-making and packing apparatus 70, the seal inspection apparatus 75, the X-ray inspection apparatus 80, the metal detector 85, the weight checking apparatus 90, and the case packing apparatus 95 through the communication unit 21. The management server 20 and each processing apparatus may be connected wirelessly or may be connected by wire. The management server 20 is also connected to communicate with the HMD 10 through the communication unit 21.

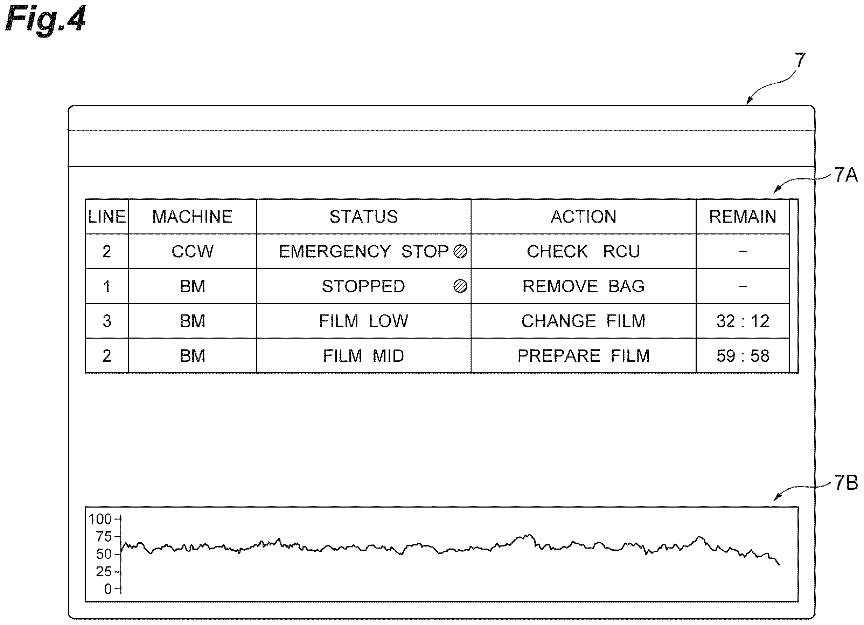

The management server 20 monitors the operation of a variety of apparatuses included in the production line 30. The management server 20 monitors, for example, the state (status) of each processing apparatus, the action to take, and the remaining time until the next status, monitors the operating ratio for each production line, or monitors the total operating ratio of all production lines, based on information transmitted from each processing apparatus. The management server 20 may display these pieces of monitoring information, for example, as a monitoring information screen 7 as illustrated in FIG. 4 on the display screen of the management server 20. The monitoring information screen 7 may have, for example, a section 7A displaying the state (status) for each processing apparatus, the action to take, and the remaining time until the next status, and a section 7B displaying the operating ratio for each production line or the total operating ratio of all production lines.

The recognition unit 22 recognizes the processing apparatus assumed to be viewed by the worker. In the present embodiment, the recognition unit 22 recognizes the processing apparatus assumed to be viewed by the worker based on the real space captured by the imaging unit 15 of the HMD 10. More specifically, the identifier 9 provided on the processing apparatus is extracted from the real space captured by the imaging unit 15 of the HMD 10, and information embedded in the extracted identifier 9 is acquired, whereby the processing apparatus assumed to be viewed by the worker is recognized. The recognition unit 22 thus can acquire the kind, number, etc. of processing apparatuses assumed to be viewed by the worker. The real space captured by the imaging unit 15 of the HMD 10 is synchronized with the real space viewed by the worker wearing the HMD 10.

The display controller 23 controls the content of information appearing on the display unit 11 of the HMD 10. When it is determined that one processing apparatus is assumed to be viewed by the worker, based on the processing apparatus recognition status by the recognition unit 22, the display controller 23 causes information on the processing apparatus recognized by the recognition unit 22 to be displayed, and when it is determined that two or more processing apparatuses are assumed to be viewed by the worker, the display controller 23 causes information on the production line 30 including the processing apparatuses recognized by the recognition unit 22 to be displayed.

Examples of the information on the processing apparatus include a processing apparatus information display screen 12A (see FIG. 7(A)) displaying information managed by the management server 20 described above, that is, information on the operating status (operation parameter) of each part in the processing apparatus. That is, information on each processing apparatus managed by the management server 20 can be seen through the display unit 11 of the HMD 10. Examples of the information on the production line 30 include a production line information display screen 12B (see FIG. 7(B) displaying information managed by the management server 20 described above, that is, information on the state (status) of each processing apparatus, the action to take, the remaining time until the next status, and the operating ratio for each production line or the total operating ratio of all production lines. That is, information on the production line 30 managed by the management server 20 can be seen through the display unit 11 of the HMD 10.

In the present embodiment, the display controller 23 determines the number of processing apparatuses assumed to be viewed by the worker, based on information such as the kind or the number of processing apparatuses recognized by the recognition unit 22. For example, when the recognition unit 22 recognizes the combination weighing apparatus 40 and the bag-making and packing apparatus 70, the display controller 23 can determine that two processing apparatuses are assumed to be viewed by the worker. For example, when the recognition unit 22 recognizes two processing apparatuses, the display controller 23 can use the information as it is and determine that two processing apparatuses are assumed to be viewed by the worker. Furthermore, the display controller 23 in the present embodiment causes information on the production line 30 to be displayed when it is determined that there is no processing apparatus assumed to be viewed by the worker, based on the processing apparatus recognition status by the recognition unit 22. When the display content on the display unit 11 is changed, the display controller 23 keeps the state for a predetermined period of time.

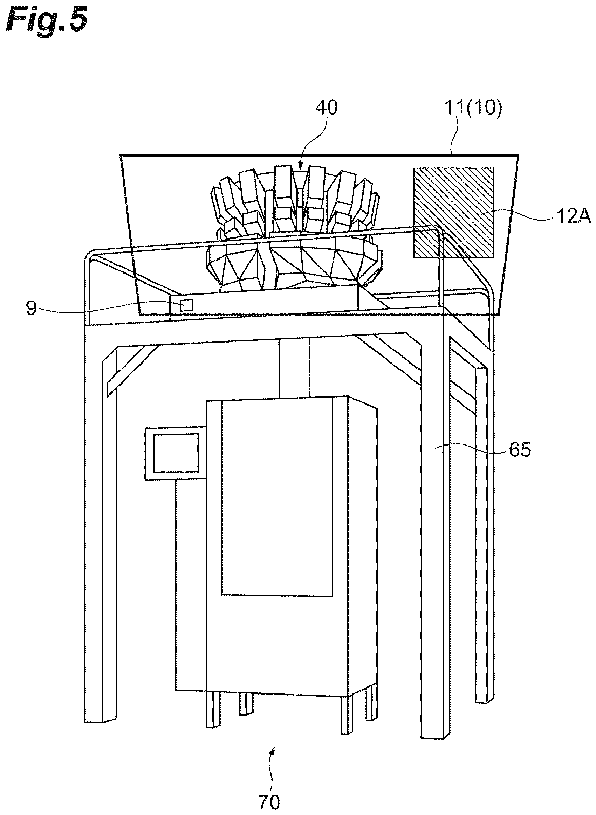

A case where a worker wearing the HMD 10 views the combination weighing apparatus 40 disposed on a base 65 as illustrated in FIG. 5 will now be described. The real space viewed by the worker generally matches the real space captured by the imaging unit 15, and an image of the combination weighing apparatus 40 captured from below the base 65 appears on the display unit 11 of the HMD 10. The worker can see the combination weighing apparatus 40 as viewed from below the base 65 through the display unit 11 of the HMD 10, in the same manner as the real space.

The imaging unit 15 transmits data of the combination weighing apparatus 40 captured from below the base 65 to the management server 20. The recognition unit 22 recognizes the processing apparatus assumed to be viewed by the worker, based on the data transmitted from the imaging unit 15. In the present embodiment, the recognition unit 22 extracts the identifier 9 attached to the combination weighing apparatus 40 from the transmitted data and recognizes that the captured processing apparatus is the combination weighing apparatus 40 deployed on the production line L1.

The display controller 23 determines that one processing apparatus is assumed to be viewed by the worker, based on information that the processing apparatus recognized by the recognition unit 22 is the combination weighing apparatus 40 deployed on the production line L1. Next, since it is determined that one processing apparatus is assumed to be viewed by the worker, the display controller 23 causes the display unit 11 to display the processing apparatus information display screen 12A (see FIG. 5 and FIG. 7(A)) as information on the combination weighing apparatus 40.

On the processing apparatus information display screen 12A, for example, the processing speed of the combination weighing apparatus 40, the target speed, the target weight, the upper limit value, and the average weight are displayed. The amount of information displayed on the display unit 11 at a time is defined. The worker can operate the keys for selecting up, down, left, and right in the input unit 16 to scroll the information appearing on the display unit 11.

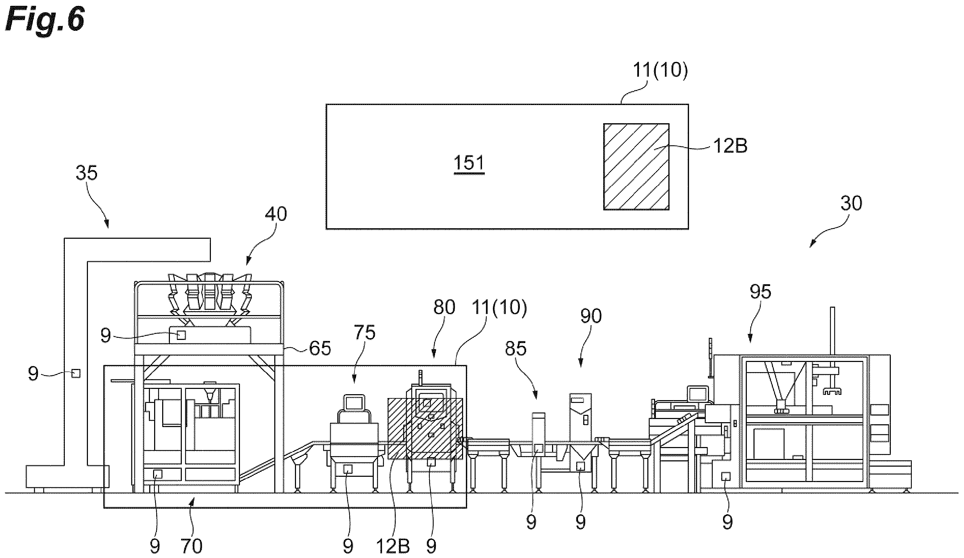

Next, a case where the worker wearing the HMD 10 views the bag-making and packing apparatus 70, the seal inspection apparatus 75, and the X-ray inspection apparatus 80 as illustrated in FIG. 6 will be described. The real space viewed by the worker generally matches the real space captured by the imaging unit 15, and the bag-making and packing apparatus 70, the seal inspection apparatus 75, and the X-ray inspection apparatus 80 are displayed on the display unit 11 of the HMD 10. The worker can see the same bag-making and packing apparatus 70, seal inspection apparatus 75, and X-ray inspection apparatus 80 as in the real space through the display unit 11 of the HMD 10.

The imaging unit 15 transmits the captured data of the bag-making and packing apparatus 70, the seal inspection apparatus 75, and the X-ray inspection apparatus 80 to the management server 20. The recognition unit 22 recognizes the processing apparatuses assumed to be viewed by the worker, based on the data transmitted from the imaging unit 15. In the present embodiment, the recognition unit 22 extracts the respective identifiers 9 attached to the bag-making and packing apparatus 70, the seal inspection apparatus 75, and the X-ray inspection apparatus 80 from the transmitted data and recognizes that the captured processing apparatuses are the bag-making and packing apparatus 70, the seal inspection apparatus 75, and the X-ray inspection apparatus 80 deployed on the production line L1.

The display controller 23 determines that three processing apparatuses are assumed to be viewed by the worker, based on the information that the processing apparatuses recognized by the recognition unit 22 are the bag-making and packing apparatus 70, the seal inspection apparatus 75, and the X-ray inspection apparatus 80 deployed on the production line L1. Next, since it is determined that two or more processing apparatuses are assumed to be viewed by the worker, the display controller 23 causes the display unit 11 to display the production line information display screen 12B (see FIG. 6 and FIG. 7(B)) as information on the production line 30 including the bag-making and packing apparatus 70, the seal inspection apparatus 75, and the X-ray inspection apparatus 80.

On the production line information display screen 12B, for example, status information of each processing apparatus is displayed. On the production line information display screen 12B, the worker can operate the keys for selecting up, down, left, and right in the input unit 16 to scroll the information appearing on the display unit 11, in the same manner as the processing apparatus information display screen 12A.

A case where the worker wearing the HMD 10 views an object other than the processing apparatuses, for example, a factory ceiling 151 as illustrated in FIG. 6 will now be described. The real space viewed by the worker generally matches the real space captured by the imaging unit 15, and the factory ceiling 151 is displayed on the display unit 11 of the HMD 10. The worker can see the same factory ceiling 151 as in the real space through the display unit 11 of the HMD 10.

The imaging unit 15 also transmits the captured data of the factory ceiling 151 to the management server 20. The recognition unit 22 recognizes the processing apparatus assumed to be viewed by the worker, based on the data transmitted from the imaging unit 15. In the present embodiment, the recognition unit 22 recognizes that no identifier 9 is included in the transmitted data.

The display controller 23 determines that there is no processing apparatus assumed to be viewed by the worker, based on the information that no processing apparatus is recognized by the recognition unit 22. Next, since it is determined that there is no processing apparatus assumed to be viewed by the worker, the display controller 23 causes the display unit 11 to display the above-noted production line information display screen 12B (see FIG. 6 and FIG. 7(B)) as information on the production line 30. The information on the production line 30 displayed here is information on all the production lines L1 to L3.

As described above, even when the display controller 23 causes the display unit 11 to display the processing apparatus information display screen 12A or the production line information display screen 12B based on the processing apparatus assumed to be viewed by the worker, the worker may wish to view another screen different from the screen appearing on the display unit 11. For example, this is the case where the worker wishes to see the production line information display screen 12B in order to check the state of the production line 30 after the processing apparatus information display screen 12A appears. In this case, the worker can operate the input unit 16 of the HMD 10 to switch the processing apparatus information display screen 12A to the production line information display screen 12B. That is, information desired by the worker can be displayed on the display unit 11. When the display content on the display unit 11 is changed, the display controller 23 keeps the state for a predetermined period of time (for example, 5 seconds). This configuration can prevent the displayed information from continuously switching in a short time.

The operation effect of the work assistance system 1 in the foregoing embodiment will now be described. In the work assistance system 1 in the foregoing embodiment, when the display controller 23 determines that one processing apparatus is assumed to be viewed by the worker, based on the processing apparatus recognition status by the recognition unit 22, the processing apparatus information display screen 12A is displayed as information on the processing apparatus recognized by the recognition unit 22, and when it is determined that two or more processing apparatuses are assumed to be viewed, the production line information display screen 12B is displayed as information on the production line 30 including the processing apparatuses recognized by the recognition unit 22. In this configuration, information to be provided to the worker (information on the processing apparatus or information on the production line) can be provided at an appropriate timing based on the state of the worker. As a result, the work efficiency of the worker can be improved.

In the foregoing embodiment, when it is determined that there is no processing apparatus assumed to be viewed by the worker, the display controller 23 causes information on the production line 30 to be displayed based on the processing apparatus recognized by the recognition unit 22. With this configuration, when the worker wishes to see information on the production line 30, the worker can easily see information on the production line 30 with a motion such as looking up.

In the foregoing embodiment, the display unit 11 of the HMD 10 displays the real space in the factory and the processing apparatus information display screen 12A or the production line information display screen 12B so as to overlap each other. With this configuration, the worker can intuitively understand what information is displayed on the display unit 11 since the processing apparatus information display screen 12A or the production line information display screen 12B is displayed so as to overlap the real space in the factory (for example, one combination weighing apparatus 40).

In the foregoing embodiment, the imaging unit 15 having portability and configured to capture an image of the real space in the factory is further provided, and the recognition unit 22 recognizes the processing apparatus assumed to be viewed by the worker based on the image captured by the imaging unit 15. This configuration enables the recognition unit 22 to easily recognize the processing apparatus assumed to be viewed by the worker.

In the foregoing embodiment, each of the processing apparatuses is provided with an identifier 9, and the recognition unit 22 recognizes the processing apparatus based on the identifier 9 included in the image captured by the imaging unit 15. This configuration enables the recognition unit 22 to easily recognize the processing apparatus assumed to be viewed by the worker.

Although an embodiment has been described above, an aspect of the present disclosure is not limited to the foregoing embodiment and is susceptible to various modifications without departing from the spirit of the present disclosure.

### <First Modification>

In the foregoing embodiment, the identifier 9 is attached to each processing apparatus, and the recognition unit 22 recognizes the processing apparatus by extracting the identifier 9 from data captured by the imaging unit 15. However, the present invention is not limited thereto. The processing apparatus may be recognized, for example, by matching of data captured by the imaging unit 15, that is, an image. More specifically, the processing apparatus may be identified by a method of matching the captured image with an image of each processing apparatus stored in advance.

### <Second Modification>

In the foregoing embodiment or the first modification, the recognition unit 22 recognizes the processing apparatus using data captured by the imaging unit 15. However, the present invention is not limited thereto. More specifically, even in a configuration that does not include the imaging unit 15, the recognition unit 22 can recognize the processing apparatus assumed to be viewed by the worker. An example thereof will be described below.

Specifically, the work assistance system 1 may include a storage unit 24 configured to store position information and identification information of a processing apparatus associated with each other and a position information acquisition unit 18 having portability and configured to acquire the position of the worker, as illustrated in FIG. 1, instead of including the imaging unit 15 of the HMD 10 or instead of using the function of the imaging unit 15.

An example of the position information acquisition unit 18 is Global Positioning System (GPS). With this configuration, the position of the worker wearing the HMD 10 can be acquired. In this configuration, the recognition unit 22 extracts identification information of the processing apparatus associated with position information that matches the position of the worker from the storage unit 24, and recognizes the processing apparatus based on the extracted identification information.

In the work assistance system 1 according to this second modification, even when the HMD 10 does not include the imaging unit 15 or does not use the function of the imaging unit 15, the processing apparatus assumed to be viewed by the worker can be easily recognized, and the number of processing apparatuses assumed to be recognized can be easily determined.

### <Third Modification>

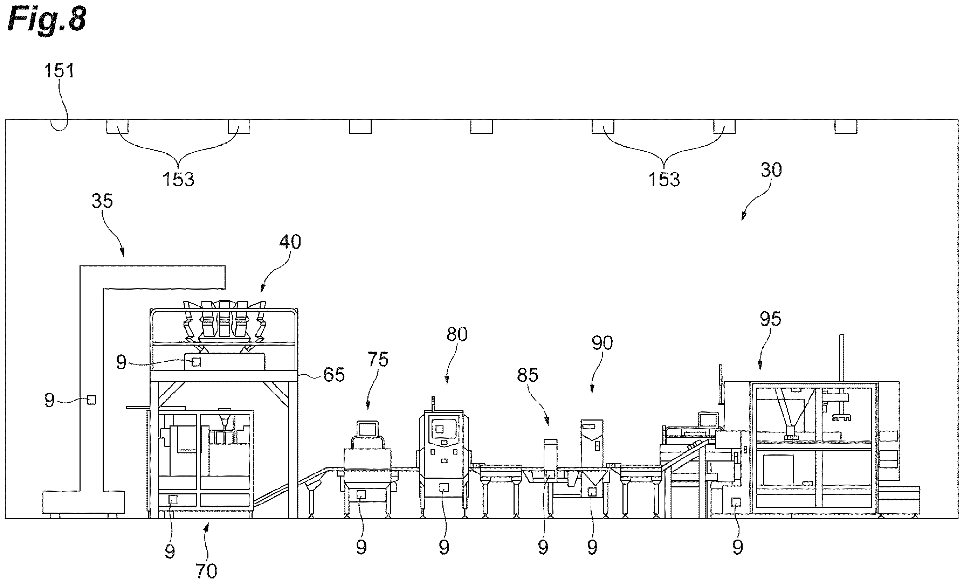

In the second modification, the GPS installed in the HMD 10 is described as the position information acquisition unit 18, by way of example. However, the present invention is not limited thereto. For example, a positioning system can be used that can identify the position of the worker wearing the HMD 10 in a predetermined region such as inside a room that is unable to receive radio waves of the GPS. The positioning system includes a transmitter 153 (see FIG. 8) and a receiver serving as the position information acquisition unit 18 mounted on the HMD 10. The transmitter 153 transmits a wireless signal that can be received by the HMD 10. Examples of the wireless signal include Bluetooth (registered trademark) Low Energy (BLE) signal, optical BLE signal, Wireless Fidelity (WiFi) (registered trademark) signal, and optical wireless signal.

The transmitter 153 is installed in advance in a range in which the HMD 10 can receive a wireless signal. As illustrated in FIG. 8, the transmitter 153 is installed, for example, on the factory ceiling 151 or a post. A wireless signal transmitted from the transmitter 153 includes information that uniquely identifies the transmitter 153 and information indicating the reception strength of the signal. For example, a MAC address preset for each transmitter 153 can be used as the information that uniquely identifies the transmitter 153. For example, received signal strength indication indicator (RSSI) can be used as the information indicating the reception strength of the signal. The reception strength indicating the reception strength of a wireless signal from each transmitter 153 is measured in advance at each position in the factory, and the measured information is stored in the storage unit 24 (see FIG. 1). The position in the factory thus can be identified as long as the position information acquisition unit 18 mounted on the HMD 10 can acquire the MAC address of the transmitter 153 and the reception strength in the factory.

In the work assistance system 1 according to this third modification, even when the HMD 10 does not include the imaging unit 15 or does not use the function of the imaging unit 15, the processing apparatus assumed to be viewed by the worker can be easily recognized, and the number of processing apparatuses assumed to be recognized can be easily determined. When the positioning system is employed, wireless signals may be received in succession alternately from adjacent transmitters 153 (which is called a chattering phenomenon). In this case, even when the HMD 10 stays at the same position, it is identified that the position is changed in a short time. In the present third modification, when position information is changed in this manner, the target processing apparatus recognized by the recognition unit 22 is also changed, so that information appearing on the display unit 11 may be switched. As described in the foregoing embodiment, the effective solution to this is that when the display content on the display unit 11 is changed, the display controller 23 keeps the state for a predetermined period of time (for example, 5 seconds). This configuration can prevent the displayed information from continuously switching in a short time.

### <Fourth Modification>

In addition to the configuration in the second modification and the third modification above, a direction identifying unit 19 having portability and configured to identify the direction assumed to be viewed by the worker may be provided. An example of the direction identifying unit 19 is an electronic compass. The direction identifying unit 19 is provided such that the direction viewed by the worker wearing HMD 10 generally matches the direction acquired by the direction identifying unit 19. That is, the direction identifying unit 19 acquires the direction in the eye direction of the worker. The direction identifying unit 19 transmits the captured data to the management server 20. In this case, the storage unit 24 stores position information, direction information, and identification information of the processing apparatus associated with each other, and the recognition unit 22 can extract the identification information of the processing apparatus associated with the position information and the direction information that match the position information of the worker and the direction assumed to be viewed by the worker, from the storage unit 24, and recognize the processing apparatus based on the extracted identification information.

In the work assistance system 1 according to this fourth modification, when the position of the worker wearing the HMD 10 is associated with the processing apparatus assumed to be viewed by the worker, the processing apparatus assumed to be viewed by the worker can be recognized with certain accuracy. However, even when the worker is located at a predetermined position, the direction viewed by the worker is unable to be exactly identified. In this respect, the work assistance system 1 according to the fourth modification can acquire the direction in the eye direction of the worker and therefore can acquire the direction viewed by the worker with high accuracy.

### <Fifth Modification>

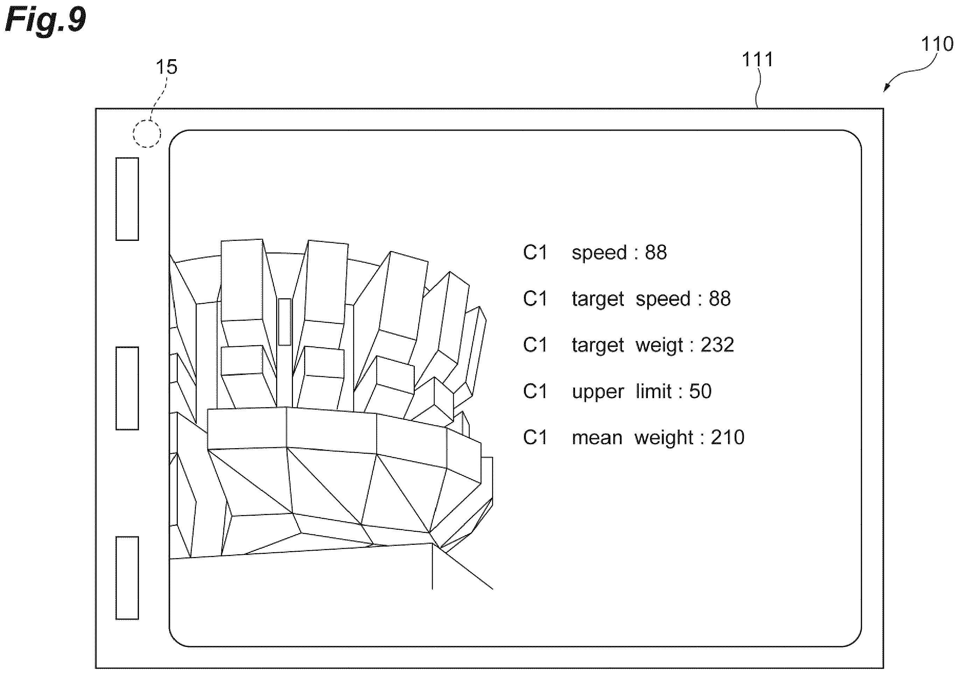

In the foregoing embodiment or modifications, a portable HMD 10 in the shape of eyeglasses is employed as an apparatus including the display unit 11 and the imaging unit 15. However, for example, a tablet PC 110 including a display unit 111 and an imaging unit 115 as illustrated in FIG. 9 may be employed. Also in this case, the similar effect to the foregoing embodiment can be achieved since the image appearing on the display unit 111 through the imaging unit 115 can be matched with the image viewed by the worker. However, the worker has to hold the tablet PC 110 in hand, whereas the HMD 10 which is one of wearable terminals makes the worker's hands free. When the HMD 10 is employed, the workability is good.

### <Another Modification>

In the foregoing embodiment or modification, the processing apparatus information display screen 12A related to the combination weighing apparatus 40 is displayed on the display unit 11. However, a processing apparatus information display screen related to a processing apparatus other than the combination weighing apparatus 40, specifically, the conveyance apparatus 35, the bag-making and packing apparatus 70, the seal inspection apparatus 75, the X-ray inspection apparatus 80, the metal detector 85, the weight checking apparatus 90, and the case packing apparatus 95, may be displayed on the display unit 11.

### Reference Signs List

1 ... work assistance system, 7 ... monitoring information screen, 9 ... identifier, 11, 111 ... display unit, 12A ... processing apparatus information display screen, 12B ... production line information display screen, 15, 115 ... imaging unit, 16 ... input unit (switching unit), 17 ... communication unit, 18 ... position information acquisition unit, 19 ... direction identifying unit, 20 ... management server, 21 ... communication unit, 22 ... recognition unit, 23 ... display controller, 24 ... storage unit, 30 ... production line (L1 to L3), 35 ... conveyance apparatus, 40 ... combination weighing apparatus, 110 ... tablet PC, 151 ... ceiling, 153 ... transmitter.

## Claims

1. A work assistance system that assist a worker working in a factory equipped with a production line formed with a plurality of processing apparatuses, the work assistance system comprising:
a display unit having portability and configured to display information provided to the worker;
a recognition unit configured to recognize a processing apparatus assumed to be viewed by the worker; and
a display controller configured to control a content of information to be displayed on the display unit, wherein
when it is determined that one processing apparatus is recognized by the recognition unit, the display controller causes the display unit to display information on the processing apparatus recognized by the recognition unit, and when it is determined that two or more processing apparatuses are recognized by the recognition unit, the display controller causes the display unit to display information on the production line including the processing apparatuses recognized by the recognition unit.

2. The work assistance system according to claim 1, wherein when it is determined that there is no processing apparatus recognized by the recognition unit, the display controller causes the display unit to display information on the production line.

3. The work assistance system according to claim 1 or 2, wherein the display unit displays a real space in the factory and information on the processing apparatus or information on the production line so as to overlap each other.

4. The work assistance system according to any one of claims 1 to 3 further comprising an imaging unit having portability and configured to capture an image of a real space in the factory, wherein
the recognition unit recognizes a processing apparatus assumed to be viewed by the worker based on an image captured by the imaging unit.

5. The work assistance system according to claim 4, wherein
each of the processing apparatuses is provided with an identifier, and
the recognition unit recognizes the processing apparatus assumed to be viewed by the worker based on the identifier included in an image captured by the imaging unit.

6. The work assistance system according to any one of claims 1 to 3, further comprising:
a storage unit configured to store position information and identification information of the processing apparatus associated with each other; and
a position information acquisition unit having portability and configured to acquire a position of the worker, wherein
the recognition unit recognizes the processing apparatus assumed to be viewed by the worker by extracting the identification information of the processing apparatus associated with the position information that matches the position of the worker from the storage unit.

7. The work assistance system according to claim 6, further comprising a direction identifying unit having portability and configured to identify a direction assumed to be viewed by the worker, wherein
the storage unit stores the position information, direction information, and the identification information of the processing apparatus associated with each other, and
the recognition unit recognizes the processing apparatus assumed to be viewed by the worker by extracting the identification information of the processing apparatus associated with the position information and the direction information that match the position of the worker and the direction assumed to be viewed by the worker from the storage unit.

8. The work assistance system according to any one of claims 1 to 7, wherein when a display content on the display unit is changed, the display controller keeps the state for a predetermined period of time.

9. The work assistance system according to any one of claims 1 to 8, further comprising a switching unit configured to switch between causing the information on the processing apparatus to be displayed on the display unit and causing the information on the production line to be displayed on the display unit, based on an operation by the worker.
